(19) **Europäisches Patentamt / European Patent Office / Office européen des brevets**

(11) **EP 1 626 282 B1**

(12) **FASCICULE DE BREVET EUROPEEN**

(45) Date de publication et mention
de la délivrance du brevet:
**10.03.2010 Bulletin 2010/10**

(51) Int Cl.:
*G01P 9/04* (2006.01)     *G01P 3/14* (2006.01)
*G01C 19/56* (2006.01)

(21) Numéro de dépôt: **05107425.0**

(22) Date de dépôt: **12.08.2005**

(54) **Micro gyromètre a détection frequentielle**

Mikrokreisel mit Frequenzdetektion

Microgyroscope with frequency detection

(84) Etats contractants désignés:
**DE GB IT**

(30) Priorité: **13.08.2004 FR 0451849**

(43) Date de publication de la demande:
**15.02.2006 Bulletin 2006/07**

(73) Titulaire: **COMMISSARIAT A L'ENERGIE ATOMIQUE**
**75015 Paris (FR)**

(72) Inventeur: **ROBERT, Philippe**
**38100, GRENOBLE (FR)**

(74) Mandataire: **Poulin, Gérard et al**
**Brevalex**
**3, rue du Docteur Lancereaux**
**75008 Paris (FR)**

(56) Documents cités:
**EP-A- 0 507 338**     **US-A- 6 032 531**
**US-A1- 2004 154 400**

## Description

## DOMAINE TECHNIQUE ET ART ANTÉRIEUR

L'invention concerne les capteurs inertiels destinés à la mesure de vitesse angulaire, ou gyromètres, et plus particulièrement les gyromètres micro usinés, c'est-à-dire faisant partie des microsystèmes électromécaniques (« Micro-Electro-Mechanical Systems » ou MEMS), notamment les gyromètres monolithiques plats.

L'utilisation des gyromètres est multiple : on les retrouve aussi bien dans l'automobile, que dans l'aéronautique ou la robotique,... Comme tout produit entrant dans un domaine grand public, tel que l'automobile, le coût est une donnée majeure. La réalisation collective de tels composants par une technologie microélectronique devient donc très attractive.

La fabrication de gyromètres usinés dans des plaquettes de silicium est déjà largement répandue. Tel qu'il l'est par exemple décrit dans le document US-B-6 250 156, ce type de composant 1, schématisé dans la figure 1A, comprend typiquement deux masses 2, 2' mobiles couplées qui vibrent à la résonance (montage en diapason) dans le plan de la plaquette 1 à laquelle elles sont indirectement ancrées. Les masses 2, 2' sont excitées par le biais de forces électrostatiques appliquées par l'intermédiaire de structures 3, 3' en peignes s'imbriquant dans les masses 2, 2'. Si on admet que la vibration des masses s'exerce suivant l'axe X, lorsque le gyromètre 1 tourne avec une certaine vitesse angulaire autour de l'axe Z (orthogonal à l'axe X), la composition de la vibration forcée avec la vitesse angulaire induit des forces, dites forces de Coriolis, qui mettent les masses 2, 2' mobiles en vibration suivant la direction Y également, ici perpendiculairement au plan de la feuille. Ce déplacement est alors détecté par le biais de moyens capacitifs 4, 4', par exemple des électrodes placées au-dessous des masses mobiles 2, 2', ce qui permet de remonter à la valeur de la vitesse de rotation autour de l'axe Z.

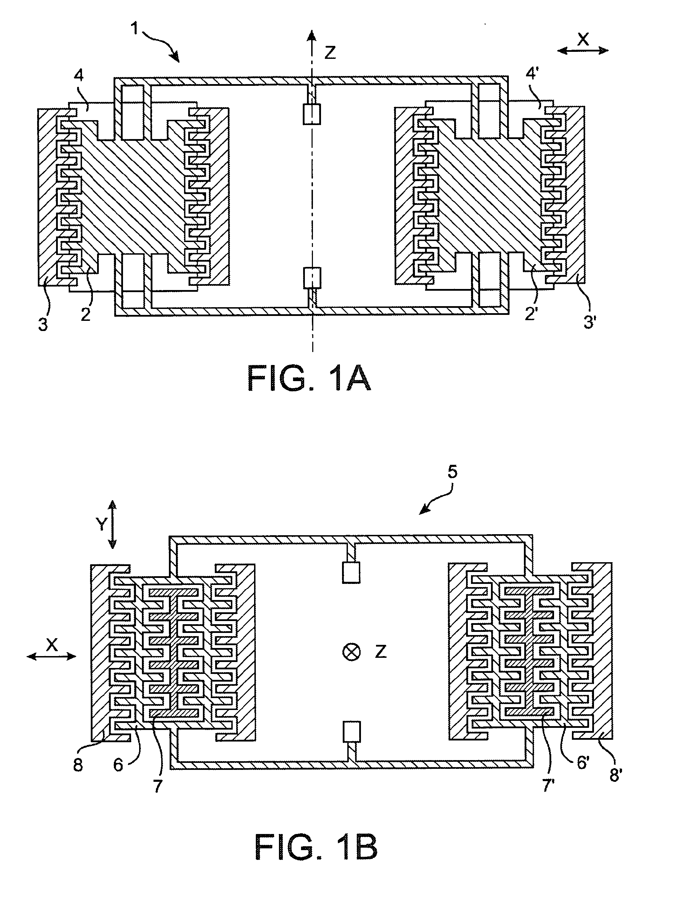

Suivant d'autres géométries et suivant un autre axe de rotation, décrit par exemple dans le document US 2004/154400 ou encore le document de Geiger W et coll. (« The micromechanical Coriolis rate sensor $\mu$CORS II », *Symposium Gyro Technology* Stuttgart 2003 : 5.0-5.9) et schématisé dans la figure 1B, la détection peut se faire dans le plan (X, Y) du gyromètre 5 où vibrent des masses mobiles 6, toujours suivant le principe d'une détection capacitive : des électrodes 7 mesurent le déplacement relatif dans la direction Y des masses 6 sous l'influence d'un déplacement angulaire selon l'axe Z et d'une vibration forcée selon X grâce à des peignes 8.

De fait, la quasi-totalité des gyromètres en silicium repose sur une détection capacitive du mouvement généré par la force de Coriolis, les masses en mouvement étant asservies en position. Cela implique cependant une électronique analogique complexe, et la sensibilité du gyromètre est moyenne, tout en étant fortement tributaire des accélérations transverses.

Le document US-A-6032531 décrit un gyromètre à masse vibrante unique vibrant dans une direction hors plan du substrat et dans lequel au moins une paire de résonateurs de détection est fixée entre la masse vibrante et substrat pour permettre une détection de la vitesse angulaire.

## EXPOSÉ DE L'INVENTION

L'invention se propose de pallier les inconvénients cités plus haut. L'invention est particulièrement adaptée aux structures de gyromètres comparables à l'état de l'art, c'est-à-dire de type diapason, par exemple des dispositifs micromécaniques, avec excitation de masses sismiques suivant un axe, et génération de forces de Coriolis suivant une direction orthogonale à cet axe de vibration et à l'axe de rotation.

Selon l'invention, plutôt que de détecter le déplacement des masses sismiques sous l'effet des forces de Coriolis par des moyens capacitifs, l'influence que ces forces génèrent sur un autre résonateur associé à la structure mobile est mesurée. En effet, sous l'effet d'une contrainte, la fréquence propre d'un résonateur mécanique change : il y a modulation de fréquence. L'invention se propose donc d'utiliser cet effet pour mesurer les forces issues du déplacement angulaire orthogonal à une vibration forcée.

Selon un mode de réalisation, le gyromètre selon l'invention comprend un premier résonateur mobile dans un plan et comprenant deux masses reliées entre elles par des moyens de liaison, des moyens pour mettre les masses en mouvement dans une première direction du plan, un deuxième résonateur de détection relié à une première partie d'extrémité au premier résonateur mobile, et des moyens pour mesurer le mode propre du résonateur de détection. Le second résonateur peut être fixé par une deuxième partie d'extrémité à un substrat qui fait partie du gyromètre, par exemple un support microtechnologique pour un gyromètre monolithique plat.

Sous un aspect préféré, l'invention concerne un gyromètre pourvu d'un dispositif, qui comprend deux masses reliées par un cadre de liaison, avantageusement deux bras de liaison parallèles reliés aux masses par des bras de flexion perpendiculaires, et qui est mobile par rapport à un substrat, le mouvement étant asservi par des moyens pour mettre les masses en mouvement et plus particulièrement pour les faire vibrer, avantageusement sous forme de peignes capacitifs. Le gyromètre comprend en outre au moins un (deuxième) résonateur de détection relié à une partie d'extrémité au dispositif mobile, et fixe à une autre. Des moyens sont prévus pour exciter le résonateur de détection et mesurer sa fréquence de résonance.

Lors de son utilisation, le gyromètre selon l'invention permet la détection de mouvements angulaires normaux à son plan, par la génération de forces de Coriolis perpendiculaires aux bras de liaison, les masses étant mises en vibration, avantageusement en résonance et en opposition de phase, dans la direction définie par les bras. La détection des mouvements est effectuée dans le plan du dispositif.

De façon préférée, le support est un substrat microélectronique, tel que le silicium monocristallin de type SOI (« Silicium on Insulator » : silicium sur isolant), et le gyromètre est micro usiné dans la partie active de ce substrat, tous les composants du gyromètre étant unitaires pour former un gyromètre monolithique.

Le résonateur de détection du gyromètre selon l'invention peut être sous forme d'une poutre vibrante ou d'un diapason ; plusieurs résonateurs peuvent être utilisés conjointement. Les résonateurs peuvent être activés également par l'intermédiaire d'électrodes capacitives, qui peuvent servir à la fois pour l'activation et la détection, ou être découplées pour chaque fonction.

Les bras de liaison sont solidarisés au support par un axe de torsion, avantageusement en leur centre, afin de transformer la force de Coriolis en couple de force sur le bras, chaque résonateur étant fixé à un bras de liaison de façon décalée par rapport à cet axe de torsion : la contrainte sur le résonateur de détection, et donc la modification de son mode propre, peuvent ainsi être augmentées, d'autant plus que ce dernier est proche de l'axe de torsion.

Le résonateur de détection peut également être associé à d'autres moyens d'amplification, comme des bras rigides articulés.

## BRÈVE DESCRIPTION DES DESSINS

Les figures annexées permettront de mieux comprendre l'invention, mais ne sont données qu'à titre indicatif et ne sont nullement restrictives.

Les figures 1A et 1B, déjà décrites, présentent des gyromètres selon l'état de la technique.

La figure 2 montre un gyromètre selon un mode de réalisation de l'invention.

La figure 3 représente schématiquement les forces en action sur un résonateur d'un gyromètre selon l'invention.

Les figures 4A à 4D montrent différentes configurations pour les résonateurs de détection d'un gyromètre selon l'invention.

## EXPOSÉ DÉTAILLÉ DE MODES DE RÉALISATION PARTICULIERS

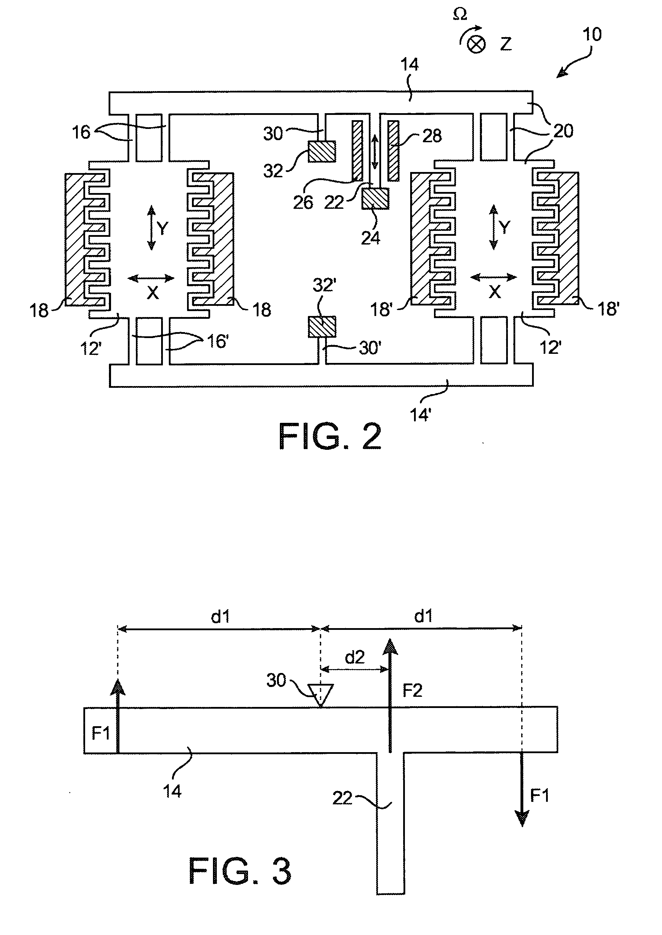

Comme schématisé sur la figure 2, le gyromètre 10 selon l'invention se compose d'un support, non représenté, et de 2 masses sismiques 12, 12' qui sont mobiles dans le plan (X, Y) du support, et notamment qui peuvent vibrer. Les deux masses 12, 12' sont couplées par des moyens de liaison, eux aussi mobiles par rapport au support. Dans le cadre représenté, deux bras de liaison 14, 14', ici parallèles, sont reliés aux masses mobiles par l'intermédiaire de moyens 16, 16' ayant une flexibilité suffisante pour permettre les mouvements relatifs des deux masses 12, 12' par rapport aux bras 14, 14', tout en étant suffisamment rigides pour transmettre les mouvements de masses 12, 12' aux bras 14, 14', tel qu'il sera plus clair par la suite. De préférence, les bras de liaison 14, 14' et les moyens flexibles, ou bras de flexion, 16, 16' forment un cadre rectangulaire ; les moyens flexibles 16, 16' peuvent par exemple être des ressorts de flexion ou une languette d'attache.

Des moyens sont prévus pour mettre les masses 12, 12' en vibration dans le plan (X, Y) du support, par exemple des peignes d'excitation 18, 18' s'imbriquant dans une ou les deux faces de chaque masse mobile 12, 12'. Les peignes 18, 18' engendrent par l'intermédiaire de forces électrostatiques un déplacement en va-et-vient de chaque masse 12, 12' dans une première direction X, ici de gauche à droite de la feuille ; d'autres moyens peuvent être envisagés, comme une excitation électromagnétique.

En particulier, les masses 12, 12' sont excitées, de préférence à la résonance ou au voisinage de la résonance, par le biais de forces électrostatiques appliquées par l'intermédiaire des structures en peignes « inter digités » 18, 18' : l'ensemble des masses 12, 12' et moyens de liaison 14, 14', 16, 16' forme ainsi un premier résonateur d'excitation 20. Le fonctionnement à la résonance permet en effet d'obtenir une forte amplitude de déplacement, et un grand facteur de qualité, augmentant d'autant la sensibilité du gyromètre. Avantageusement, la vibration des masses 12, 12' est en opposition de phase, c'est-à-dire que leurs mouvements sont en direction opposée à chaque instant : la distance séparant les deux masses 12, 12' est variable, cette variation étant tolérée par les moyens flexibles 16, 16'. Ceci permet la détection par des deuxièmes résonateurs.

Lorsque le gyromètre 10 subit un déplacement angulaire autour d'un axe Z perpendiculaire au support, une force de Coriolis est générée sur chaque masse 12, 12', perpendiculaire aux axes X et Z et donc ici dans la direction verticale Y de la feuille, issue de la composition de la vibration forcée par les éléments 18, 18' avec la vitesse angulaire $\Omega$. Les forces de Coriolis sont transmises aux bras 14, 14' par les moyens flexibles 16, 16' ; si un deuxième résonateur 22 est couplé à un bras 14, il subit lui aussi une contrainte issue de la force de Coriolis.

Cette contrainte déplace la fréquence de résonance $\varpi$ du résonateur de détection 22. La vitesse de rotation $\Omega$ autour de l'axe Z est alors déduite du déplacement en fréquence $\delta\varpi$ mesuré. En particulier, le résonateur 22 est excité et asservi de préférence sur son pic de résonance ou à son voisinage ; un système électronique numérique permet de remonter aisément à la fréquence de résonance à chaque instant.

Du fait de sa connexion aux bras de liaison 14, 14', et non à une masse mobile 12, 12', le résonateur de détection 22 est en outre moins perturbé par les mouvements de la masse 12, 12' et sa sensibilité est accrue.

Le résonateur 22 peut par exemple être sous la forme d'une poutre vibrante telle que schématisée sur la figure 2, dont une première extrémité est reliée au bras de liaison 14 et l'autre est ancrée au substrat par tout moyen 24 connu. Selon un mode de réalisation préféré, le résonateur 22 est excité à la résonance de façon capacitive par des électrodes fixes qui servent également à la détection. On peut également avoir une électrode de détection 26 dissociée de l'électrode d'excitation 28. Une excitation électromagnétique est également envisageable, tout comme une détection par jauge piézoélectrique.

Afin d'augmenter la détection possible et la sensibilité du résonateur 22, avantageusement, sur chaque bras 14, 14' est localisé un axe de torsion 30, 30' destiné à transformer les forces de Coriolis s'exerçant au niveau des masses 12, 12' en un couple de forces autour de cet axe de torsion 30, 30', par un effet de « bras de levier » qui permet d'exercer la contrainte la plus importante possible sur le résonateur 22.

Chacun de ces axes de torsion 30, 30' est ainsi rattaché à une extrémité au support par un ancrage 32, 32', et à l'autre extrémité au bras de liaison 14, 14', dans leur axe médian. Comme schématisé, les ancrages 32, 32' sont avantageusement disposés à l'intérieur du cadre rectangulaire 14, 14', 16, 16', vers le centre de la structure 20, pour limiter les dérives en température du gyromètre 10.

Comme schématisé sur la figure 3, pour une force de Coriolis F1 exercée sur chaque masse, localisée à une distance d1 de l'axe de torsion 30 situé au milieu du bras 14, un résonateur 22 fixé à une distance d2 de l'axe de torsion 30 du bras 14 subit une force F2 selon l'équation F2 = 2.(d1/d2).F1. Pour une géométrie de gyromètre 10 donnée et une vitesse de rotation $\Omega$ donnée, le déplacement en fréquence $\delta\varpi$ du résonateur 22 de détection sera d'autant plus élevé que le bras de levier défini par l'ensemble bras de liaison/axe de flexion, sera important.

Pour que les résultats soient le plus fiables possible, le résonateur d'excitation 20 est symétrique, c'est-à-dire en particulier que les deux masses 12, 12' sont identiques, tout comme les deux bras de liaison 14, 14' et les bras de flexion 16, 16'. De même, les deux masses 12, 12' sont excitées de façon similaire en opposition de phase.

Ainsi, grâce au dispositif 10 selon la figure 2, la fréquence de résonance $\varpi$ du résonateur 22 détectée lors du déplacement angulaire $\Omega$ du gyromètre 10 permet de déterminer ce déplacement angulaire $\Omega$, sans avoir besoin de déterminer le déplacement relatif des masses en mouvement 12, 12' dû aux forces de Coriolis F1. Or la mesure d'une fréquence ne nécessite qu'une électronique de détection numérique, simplifiée par rapport aux systèmes capacitifs existants pour la détection de déplacement.

De plus, cette détection est effectuée dans le plan du dispositif 10, ce qui allège le contrôle des espacements entre les constituants.

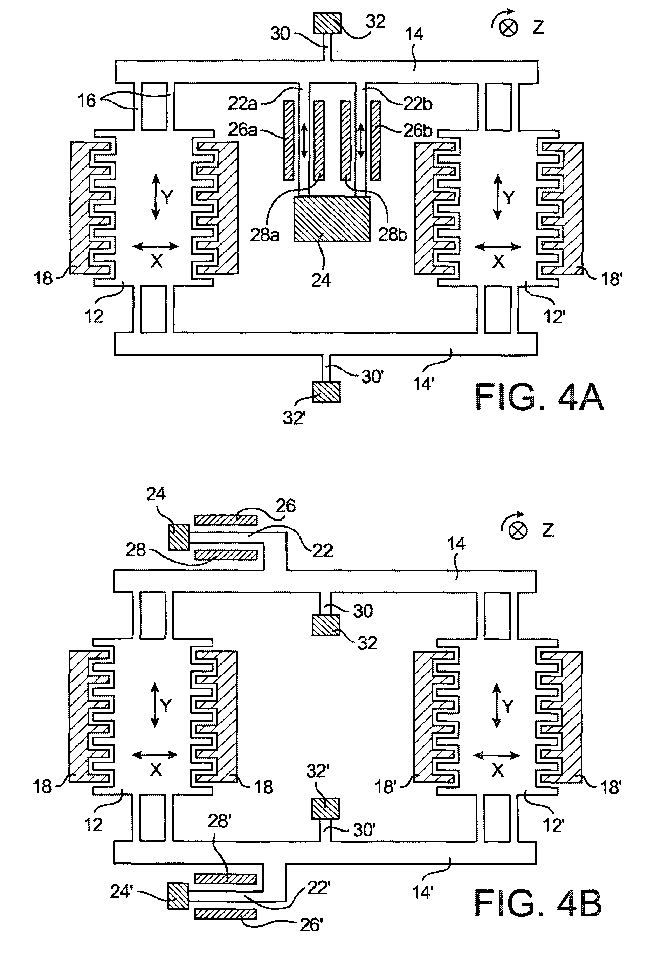

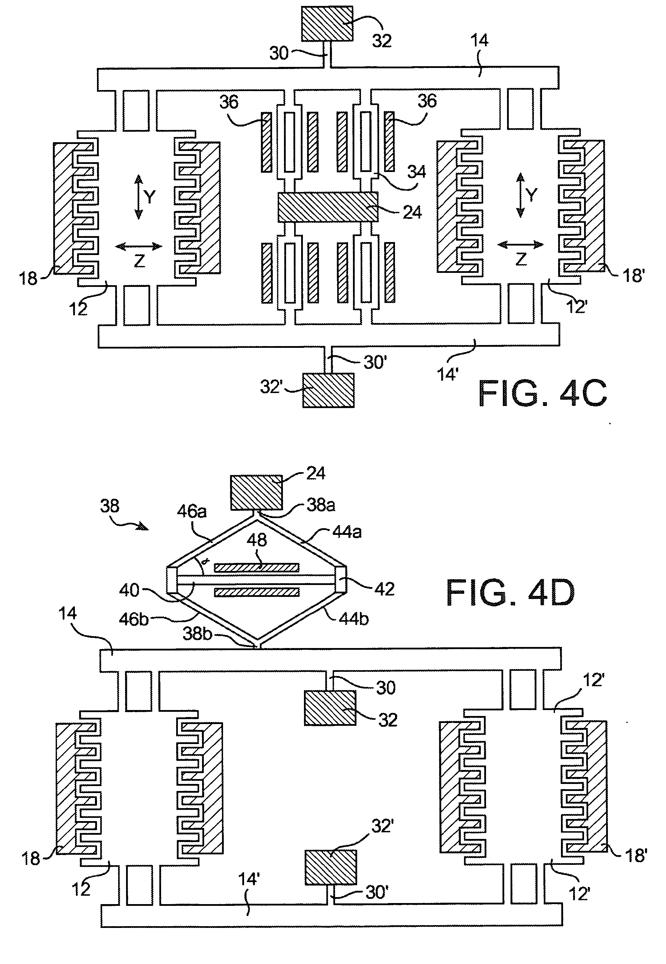

Le résonateur présenté sur la figure 2 n'est qu'illustratif : il est possible, tel que schématisé sur la figure 4A, d'utiliser par exemple deux résonateurs 22a, 22b de détection sur un même bras de liaison 14. Les deux résonateurs 22a, 22b ont le même mode propre $\varpi$ et sont montés symétriquement par rapport à l'axe de torsion 30 : un tel montage en différentiel permet d'augmenter la sensibilité de détection, et de s'affranchir de certains effets non linéaires.

Un montage en différentiel sur les deux bras 14, 14' peut également être réalisé, avec deux résonateurs 22, 22' situés dans ce cas du même côté d'un axe du dispositif mobile 20 défini par les deux axes de torsion 30, 30' : figure 4B. Ce montage peut bien entendu être doublé sur chaque bras 14, 14'.

On note en outre dans le cas schématisé que les poutres 22, 22', ou plus généralement les résonateurs de détection, ne sont pas nécessairement parallèles à la direction Y de la force de Coriolis mais peuvent être par exemple parallèles au bras de liaison 14, 14'.

Il est possible également d'utiliser des résonateurs 34 de type diapason à la place de résonateurs 22 de type poutre, sur un bras ou les deux (figure 4C). L'utilisation de résonateurs 34 de type diapason permet d'obtenir des coefficients de qualité plus importants, et donc un gain en sensibilité et en stabilité. Les résonateurs 34 de type diapason peuvent eux aussi être excités par l'intermédiaire d'électrodes capacitives fixes 36 ou par des moyens électromagnétiques.

Il faut noter que le point d'ancrage 24 des résonateurs n'est que schématiquement représenté comme unique pour tous les résonateurs dans la figure 4C (voir par exemple figure 4B).

Pour fonctionner suivant des conditions optimales, il peut être préférable que la fréquence de résonance des masses 12, 12' soit voisine de la fréquence de résonance du dispositif mobile 20 composé de l'ensemble masses 12, 12', moyens flexibles 16, 16' et bras de liaison 14, 14', autour de son axe de torsion 30, 30'. Par ailleurs, pour augmenter la sensibilité, il est avantageux que le mode propre $\varpi$ du résonateur 22, 34 de détection soit nettement supérieur à la fréquence de résonance du dispositif mobile, ou résonateur d'excitation, 20.

Outre la simplification de l'électronique de détection, le gyromètre 10 selon l'invention présente une forte sensibilité du capteur 22, 34, inhérente à la détection fréquentielle et augmentée par l'effet « bras de levier » dû à l'axe de torsion 30. La diminution de la distance d2 entre l'axe de torsion 30 et le résonateur 22, 34 permet également d'augmenter la sensibilité.

Un autre moyen d'amplification de la sensibilité du gyromètre 10 est représenté sur la figure 4D : le système de détection 38 est relié à un point d'ancrage 24 à une extrémité 38a et à l'autre extrémité 38b au bras de liaison 14. Cependant, les deux extrémités 38a, 38b du système de détection par résonance 38 ne constituent pas les extrémités de l'élément vibrant 40 proprement dit. De fait, la poutre vibrante 40 comprend deux parties terminales rigides 42. Chacune des parties terminales 42 est reliée par deux bras 44, 46 rigides aux extrémités 38a, 38b du système de détection 38 par des articulations. De façon avantageuse, les bras articulés 44a, 44b, 46a, 46b sont symétriques et forment un losange ; ils peuvent être uniformes ou varier en épaisseur.

Dans le cadre représenté, uniquement illustratif, la force de Coriolis est perpendiculaire au résonateur 40 : la force de Coriolis entraîne une modification de la distance entre les extrémités 38a, 38b du système de détection 38. Les bras 44, 46 étant rigides, l'angle $\alpha$ entre les bras 44, 46 et le résonateur 40 et la longueur de la poutre vibrante 40 sont donc modifiés, ce qui entraîne un déplacement de la fréquence de résonance de la poutre 40, qui est excitée par des électrodes fixes 48 par exemple. L'angle $\alpha$ permet de jouer directement sur le coefficient d'amplification. Il est clair que d'autres configurations pour les bras 44, 46 sont possibles pour le même résultat.

Par ailleurs, le gyromètre 10 présente une faible sensibilité aux accélérations transverses, et donc une meilleure détermination du déplacement angulaire $\Omega$. Il n'existe pas non plus de phénomènes de couplage entre fréquence de résonance d'excitation et fréquence propre $\varpi$ du résonateur de détection 22, 34, 40 contrairement aux possibles interférences lors d'une détection capacitive.

Le gyromètre selon l'invention est ainsi très sensible, stable, et simplifié par rapport aux gyromètres de même type existant grâce au traitement électronique numérique direct notamment. Il est clair que les différents modes de réalisation présentés dans les figures peuvent aisément être combinés.

Le gyromètre 10 selon l'invention peut être fabriqué selon toutes les techniques connues en micro technologie, et plus particulièrement en microélectronique. Avantageusement, le substrat est en silicium, en particulier monocristallin, de type SOI, ce qui augmente le facteur de qualité. L'épaisseur de la plaque de silicium initiale est de quelques centaines de micromètres, par exemple 525 $\mu$m, sur laquelle se trouve une couche fine, par exemple de 0,4 $\mu$m, de $SiO_2$, elle-même couverte d'une couche plus épaisse de silicium monocristallin qui déterminera l'épaisseur des éléments du gyromètre 10, par exemple de l'ordre de 60 $\mu$m.

L'usinage du gyromètre 10 consiste à graver dans la couche supérieur de silicium (par lithogravure par exemple) jusque la couche d'oxyde les motifs de surface désirés, à savoir la forme des éléments du premier résonateur 20 et du résonateur de détection 22, 34, 40 du gyromètre 10. Ensuite, la couche d'oxyde sous-jacente est retirée, par exemple par une attaque sélective, sauf pour les points d'ancrage 24, 32. On obtient ainsi une structure en suspension sur le substrat, maintenue à une distance de l'ordre de l'épaisseur de la couche d'oxyde initiale par les points d'ancrage, et libre d'être mise en mouvement, et en particulier en vibration.

D'autres procédés sont naturellement envisageables.

## Revendications

1. Gyromètre (10) comprenant :

   - un résonateur d'excitation (20), mobile selon un plan (X, Y), comprenant deux masses (12, 12') reliées entre elles par des moyens de liaison (14, 19', 16, 16') comprenant des bras de liaison (14,14') ;
   - des moyens d'excitation (18, 18') pour mettre les masses (12, 12') en mouvement dans une première direction (X) du plan (X, Y) ;
   - au moins un résonateur de détection (22, 34, 40) dont une extrémité est reliée à un des bras de liaison (14) du résonateur (20) d'excitation;
   - des moyens (26, 28, 36, 48) pour exciter le résonateur (22, 34, 40) de détection et mesurer la fréquence de son mode propre ($\overline{\omega}$).
   - un substrat auquel chaque résonateur (20, 22, 34, 40) est relié par au moins un point d'ancrage (24, 32).

2. Gyromètre selon la revendication 1 dans lequel le substrat est un support microtechnologique, le gyromètre étant monolithique.

3. Gyromètre selon l'une des revendications 1 ou 2 dans lequel les moyens (18, 18') pour mettre les masses (12, 12') en mouvement sont des peignes capacitifs fixes.

4. Gyromètre selon l'une des revendications 1 à 3 dans lequel les moyens de liaison comprennent deux bras de liaison (14, 14') parallèles à la première direction (X) de mouvement des masses (12, 12'), et reliés aux masses (12, 12') par l'intermédiaire de bras de flexion (16, 16'), de sorte que les bras de liaison (14, 14') sont perpendiculaires à la force de Coriolis (F1) générée par le mouvement des masses dans la première direction (X) et une rotation ($\Omega$) du résonateur d'excitation (20) par rapport à un axe (Z) perpendiculaire au plan (X, Y).

5. Gyromètre selon la revendication 4 dans lequel chaque bras de liaison (14, 14') est relié à un axe de torsion (30, 30').

6. Gyromètre selon la revendication 5 comprenant un premier résonateur de détection (22, 34, 40) relié à un premier bras (14) de liaison à une première distance de l'axe de torsion (30).

7. Gyromètre selon la revendication 6 comprenant en outre un second résonateur de détection (22') relié au deuxième bras (14') de liaison à une deuxième distance de l'axe de torsion (30').

8. Gyromètre selon la revendication 7 dans lequel la première et la deuxième distance sont égales, et dans lequel les résonateurs (22, 22') de détection sont reliés aux premier et deuxième bras (14, 14') entre l'axe de torsion respectif (30, 30') et la même masse (12).

9. Gyromètre selon la revendication 7 comprenant deux résonateurs de détection (22a, 22b) reliés à un premier bras (14) de liaison symétriquement par rapport à l'axe de torsion (30).

10. Gyromètre selon la revendication 9 comprenant en outre deux résonateurs de détection reliés au deuxième bras (14') de liaison, symétriques par rapport à l'axe de torsion (30') et à la première distance de l'axe de torsion (30').

11. Gyromètre selon l'une des revendications 1 à 10 dans lequel le(s) résonateur(s) de détection sont choisis parmi les poutres vibrantes (22) ou résonateurs en diapason (34).

12. Gyromètre selon l'une des revendications 1 à 11 dans lequel les résonateurs (40) de détection sont connectés à des moyens d'amplification de l'effort exercé sur eux par le résonateur d'excitation (20).

13. Gyromètre selon la revendication 12 dans lequel les moyens d'amplification comprennent des bras rigides (44, 46) articulés autour d'un élément résonant (40).

14. Gyromètre selon l'une des revendications 1 à 13 comprenant des moyens (26, 28, 36, 48) pour activer chaque résonateur (22, 34, 40) de détection.

15. Gyromètre selon la revendication 14 dans lequel les moyens pour activer les résonateurs de détection sont de type capacitif.

**Claims**

1. Gyrometer (10) comprising:

   - a first excitation resonator (20), free to move in a plane (X, Y), comprising two masses (12, 12') connected to each other by connecting means (14, 14', 16, 16');
   - excitation means (18, 18') for putting masses (12, 12') into movement in a first direction (X) of the plane (X, Y);
   - at least one second detection resonator (22, 34, 40) connected to the first resonator (20);
   - means (26, 28, 36, 48) of exciting the second resonator (22, 34, 40) and measuring the frequency of its natural mode ($\overline{\omega}$)
   - a substrate to which each resonator (20, 22, 34, 40) is connected through at least one anchor point (24, 32).

2. Gyrometer according to claim 1, wherein the substrate is a microtechnological support, the Gyrometer being monolithic.

3. Gyrometer according to one of claims 1 or 2, wherein means (18, 18') of putting the masses (12, 12') into movement are fixed capacitive combs.

4. Gyrometer according to one of claims 1 to 3, wherein the connecting means comprise two connecting arms (14, 14') parallel to the first movement direction (X) of the masses (12, 12'), and connected to the masses (12, 12') through bending arms (16, 16'), such that the connecting arms (14, 14') are perpendicular to the Coriolis force (F1) generated by the movement of the masses in the first direction (X) and a rotation ($\Omega$) of the first excitation resonator (20) from an axis (Z) perpendicular to the plane (X, Y).

5. Gyrometer according to claim 4, wherein each connection arm (14, 14') is connected to a torsion axis (30, 30').

6. Gyrometer according to claim 5, comprising a first second detection resonator (22, 34, 40) connected to a first connecting arm (14) at a first distance from the torsion axis (30).

7. Gyrometer according to claim 6, also comprising another second detection resonator (22') connected to the second connecting arm (14') at a second distance from the torsion axis (30').

8. Gyrometer according to claim 7, wherein the first and the second distances are equal, and wherein the detection resonators (22, 22') are connected to the first and second arms (14, 14') between the corresponding torsion axis (30, 30') and the same mass (12).

9. Gyrometer according to claim 7, comprising two second detection resonators (22a, 22b) connected to a first connecting arm (14) symmetrically about the torsion axis (30).

10. Gyrometer according to claim 9, also comprising two second detection resonators connected to the second connecting arm (14'), symmetric about the torsion axis (30') and at the first distance from the torsion axis (30').

11. Gyrometer according to any one of claims 1 to 10, wherein the second detection resonators are chosen from among the vibrating beams (22) or tuning forkshaped resonators (34).

12. Gyrometer according to any one of claims 1 to 11, wherein the second detection resonators (40) are connected to means for amplifying the force exerted on them by the first excitation resonator (20).

13. Gyrometer according to claim 12, wherein the amplification means comprise rigid arms (44, 46) hinged about a resonant element (40).

14. Gyrometer according to any one of claims 1 to 13, comprising means (26, 28, 36, 48) for activating each second resonator (22, 34, 40).

15. Gyrometer according to claim 14, wherein the means for activating the second resonators are capacitive type means.

**Patentansprüche**

1. Gyrometer (10), umfassend:

- einen in einer Ebene (X,Y) beweglichen Anregungsresonator (20), welcher zwei Massen (12, 12') umfasst, welche über Verbindungsarme (14, 14') umfassende Verbindungsmittel (14, 14', 16, 16') miteinander verbunden sind;
- Mittel zur Anregung (18, 18'), um die Massen (12, 12') in einer ersten Richtung (X) der Ebene (X,Y) in Bewegung zu setzen;
- mindestens einen Detektionsresonator (22, 34, 40), wobei ein Ende des mindestens einen Detektionsresonators mit einem der Verbindungsarme (14) des Anregungsresonators (20) verbunden ist;
- Mittel (26, 28, 36, 48) zum Anregen des Detektionsresonators (22, 34, 40) und zum Messen der Frequenz seiner Eigenmode ($\overline{\omega}$);
- ein Substrat, mit weiche jeder Resonator (20, 22, 34, 40) über mindestens einen Verankerungspunkt (24, 32) verbunden ist.

2. Gyrometer nach Anspruch 1, wobei das Substrat ein mikrotechnologischer Träger ist und das Gyrometer monolisthisch ist.

3. Gyrometer nach einem der Ansprüche 1 oder 2, wobei die Mittel (18, 18'), um die Massen (12, 12') in Bewegung zu setzen, feststehende kapazitive Kämme sind.

4. Gyrometer nach einem der Ansprüche 1 bis 3, wobei die Verbindungsmittel zwei zu der ersten Richtung (X) der Bewegung der Massen (12, 12') parallel verlaufende und über Biegearme (16, 16') mit den Massen (12, 12') verbundene Verbindungsarme (14, 14') umfassen, so dass die Verbindungsarme (14, 14') senkrecht zu der Corioliskraft (F1) verlaufen, welche durch die Bewegung der Massen in der ersten Richtung (X) und eine Rotation ($\Omega$¶) des Anregungsresonators (20) bezüglich einer zu der Ebene (X,Y) senkrecht verlaufenden Achse (Z) erzeugt wird.

5. Gyrometer nach Anspruch 4, wobei jeder Verbindungsarm (14, 14') mit einer Torsionsachse (30, 30') verbunden ist.

6. Gyrometer nach Anspruch 5, umfassend einen ersten Detektionsresonator (22, 34, 40), welcher mit einem ersten Verbindungsarm (14) in einem ersten Abstand zu der Torsionsachse (30) verbunden ist.

7. Gyrometer nach Anspruch 6, umfassend weiterhin einen zweiten Detektionsresonator (22'), welcher mit dem zweiten Verbindungsarm (14') in einem zweiten Abstand zu der Torsionsachse (30') verbunden ist.

8. Gyrometer nach Anspruch 7, wobei der erste und der zweite Abstand gleich sind, und wobei die Detektionsresonatoren (22, 22') mit dem ersten und dem zweiten Arm (14, 14') zwischen der jeweiligen Torsionsachse (30, 30') und derselben Masse (12) verbunden sind.

9. Gyrometer nach Anspruch 7, umfassend zwei Detektionsresonatoren (22a, 22b), welche mit einem ersten Verbindungsarm (14) symmetrisch bezüglich der Torsionsachse (30) verbunden sind.

10. Gyrometer nach Anspruch 9, umfassend weiterhin zwei Detektionsresonatoren, welche mit dem zweiten Verbindungsarm (14') symmetrisch bezüglich der Torsionsachse (30') und in dem ersten Abstand zu der Torsionsachse (30') verbunden sind.

11. Gyrometer nach einem der Ansprüche 1 bis 10, wobei der (die) Detektionsresonator(en) ausgewählt ist (sind) aus den Schwingbalken (22) oder Stimmgabel-Resonatoren (34).

12. Gyrometer nach einem der Ansprüche 1 bis 11, wobei die Detektionsresonatoren (40) an Mittel zur Verstärkung der durch den Anregungsresonator (20) auf sie ausgeübten Kraft angeschlossen sind.

**13.** Gyrometer nach Anspruch 12, wobei die Mittel zur Verstärkung gelenkig um ein resonantes Element (40) angebrachte starre Arme (44, 46) umfassen.

**14.** Gyrometer nach einem der Ansprüche 1 bis 13, umfassend Mittel (26, 28, 36, 48) zum Aktivieren jedes Detektionsresonators (22, 34, 40).

**15.** Gyrometer nach Anspruch 14, wobei die Mittel zum Aktivieren der Detektionsresonatoren kapazitiver Art sind.

FIG. 1A

FIG. 1B

FIG. 2

FIG. 3

FIG. 4A

FIG. 4B

FIG. 4C

FIG. 4D

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 6250156 B
- US 2004154400 A
- US 6032531 A